# EUROPEAN PATENT SPECIFICATION

(11) **EP 0 724 835 B1**
(45) Date of publication and mention of the grant of the patent: **08.11.2000**
(21) Application number: 95922770.3
(22) Date of filing: 27.06.1995
(51) Int. Cl.: A23D 9/00, A23G 1/00, C11C 3/00, C11B 5/00

(54) **BLOOMING-RESISTANT FAT AND LAURIN-BASE HARD BUTTER**
GEGEN GRAUEN KAKAOBUTTERBELAG BESTÄNDIGES FETT UND LAURIN-HARTFETT
MATIERES GRASSES RESISTANT AU BLANCHIMENT ET BEURRE DUR A BASE DE LAURINE

(30) Priority: 27.06.1994 JP 14498094
(43) Date of publication of application: 07.08.1996
(73) Proprietor: FUJI OIL CO., LTD., Osaka 542 (JP)
(72) Inventor: HOKUYO, Kosuke, 120 Brampton Road, Savannah, GA 31408 (US); HAYASHI, Miho, Osaka-shi Osaka 558 (JP); YAMAGUCHI, Syuichi, Osaka 591 (JP); IZUMI, Tugio, Sennan-gun Osaka 590-04 (JP)
(74) Representative: Hansen, Bernd, Dr. Dipl.-Chem.
(86) International application number: JP9501281
(87) International publication number: WO9600013

(56) References cited:
- EP-A- 0 560 425
- JP-A- 4 258 252
- JP-A- 5 184 295
- JP-A- 61 067 444

## Description

### Field of the Invention:

This invention relates to blooming-resistant fat which inhibits fat blooming of laurin-base chocolate and to laurin-base hard butter.

### Background of the Invention:

Laurin-base fats and oils comprising lauric acid having 12 carbon atoms as main constituent fatty acid, such as coconut oil and palm kernel oil, melt quickly and have similar properties to cacao fat's. They are therefore used as fat or oil for chocolate, i.e., laurin-base hard butter, if necessary after interesterification, hydrogenation, fractionation or the like treatment.

Satisfactory in workability and melting in the mouth, chocolate containing laurin-base hard butter has found various uses in not only casting in a mold into a chocolate bar but coating cookies or biscuits or coating nuts in a rotary pan. However, chocolate of this type suffers from white specks appearing on the surface due to fat blooming.

Fat blooming is a phenomenon usually observed with chocolate products using laurin-base fat or oil. Study has been conducted in order to prevent fat blooming, and improvement of the process for producing chocolate and addition of a surface active agent as fat blooming preventive to laurin-base hard butter have been attempted.

Included in the method of adding surface active agents are: addition of a combination of a sorbitan saturated fatty acid ester and a glycerol fatty acid ester to a fat and oil component of chocolate as disclosed in JP-A-61-67444 (the term "JP-A" as used herein means an "unexamined published Japanese patent application"); and addition of a specific sucrose fatty acid as disclosed in JP-A-64-39945 and JP-A-2-35042. However, addition of surface active agents to chocolate tends to impair the chocolate flavor.

Addition of fat having a specific triglyceride composition to chocolate has recently been proposed as described in JP-A-6-17082. Although this method may be effective in preventing tempered type hard butter from causing fat blooming, the same effect is scarcely exerted on laurin-base hard butter.

### Disclosure of the Invention:

An object of the present invention is to effectively inhibit laurin-base hard butter from causing fat blooming without detriment to the flavor.

As a result of extensive study, the inventors of the invention have found that a fat or oil having a specific triglyceride composition produces noticeable effects on inhibition of blooming of laurin-base hard butter. The present invention has been completed based on this finding.

The present invention relates to a blooming-resistant fat containing at least 68% by weight of triglycerides wherein the total number of carbon atoms of the constituent fatty acid residues is 38 to 48 and the weight ratio of fatty acids having 12 carbon atoms constituting the triglyceride to that of stearic acid is 1.2/1 to 2.1/1; and laurin-base hard butter having added thereto at least 1% by weight of the blooming-resistant fat.

The blooming-resistant fat of the invention can be obtained by fractionation of naturally-occurring laurin-base fats and oils and concentration or, more efficiently by interesterification between fats and oils containing fatty acids of 16 or more carbon atoms as constituent fatty acids in a large proportion and laurin-base fats and oils.

Fats and oils containing fatty acids having 16 or more carbon atoms in a large proportion in all the constituent fatty acids include palm oil, sunflower oil, rapeseed oil, soybean oil, cacao butter, beef tallow, safflower oil, shea butter, and olive oil. These fats and oils contain fatty acids having 16 carbon atoms or more in a proportion of 30% or more. Laurin-base fats and oils are not particularly limited by production process and the like and include naturally-occurring vegetable fats and oils, such as palm kernel oil, coconut oil, and babassu oil, and processed fats and oils obtained by hydrogenation, fractionation or interesterification of the above-mentioned fats and oils.

The interesterification used in the invention does not particularly require positional specificity. The reaction may be either a catalytic reaction using in alkali metal catalyst, such as sodium methylate, or an enzymatic reaction using lipase.

It is necessary for the blooming-resistant fat to have such a composition that the fat contains at least 68% by weight of triglycerides wherein the total number of carbon atoms of the constituent fatty acid residues is 38 to 48 and the weight ratio of fatty acids having 12 carbon atoms constituting the triglyceride to that of stearic acid is 1.2/1 to 2.1/1, preferably 1.3/1 to 2.0/1. If the content of the above-specified triglycerides is less than 68% by weight, the effect as blooming-resistant fat, i.e., the effect of the fat, when added to laurin-base hard butter, in inhibiting fat blooming of the hard butter would be insubstantial.

If desired, the blooming-resistant fat may be hydrogenated to have controlled hardness or may be mixed with other fats and oils as far as the above-mentioned composition conditions are fulfilled.

The thus obtained blooming-resistant fat can be added to laurin-base hard butter in an amount of at least 1% up to a considerably large amount, preferably 3 to 40% by weight, still preferably 5 to 30% by weight, to give laurin-base hard butter having excellent blooming-resistant properties. If the amount of the blooming-resistant fat to be added is less than 1%, the bloom inhibition effect is insufficient. If it exceeds 40%, the pleasant melting texture in the mouth, which is characteristic of laurin-base hard butter, would be impaired.

### Examples and Comparative Examples:

The modes for carrying out the invention are shown in Examples 1 to 6, and the results of comparative tests are given in Comparative Examples 1 to 3.

It should be understood that the Examples are for illustrative purposes only but not for limitation. All the parts and percents are by weight.

### EXAMPLE 1

A reaction oil obtained by interesterification of 20 parts of a high melting point fraction (stearin) of palm oil and 80 parts of palm kernel olein using sodium methylate was fully hydrogenated to obtain blooming-resistant fat. In the resulting blooming-resistant fat, the content of triglycerides wherein the total number of carbon atoms of the constituent fatty acid residues is 38 to 48 (hereinafter referred to as 38-48TG) was 71.2%, and the weight ratio of fatty acids having 12 carbon atoms constituting the triglyceride to that of stearic acid (hereinafter referred to as C12/C18) was 1.4/1. Forty parts of the resulting blooming-resistant fat were mixed with 60 parts of purified fractionated palm kernel oil. Chocolate was prepared using the mixed oil as test oil. The chocolate formulation is shown in Table 1 below (hereinafter the same). The chocolate was applied to crunchy candies in a rotary pan, and the chocolate coat was subjected to a preservation test.

**TABLE 1**

| Chocolate Formulation | |
|---|---|
| Sugar | 45% |
| Test oil | 34% |
| Skim milk powder | 12% |
| Cocoa powder | 9% |
| Lecithin | 0.5% |

### EXAMPLE 2

A reaction oil obtained by interesterification of 20 parts of a high melting point fraction (stearin) of palm oil and 80 parts of palm kernel oil using sodium methylate was fully hydrogenated to give blooming-resistant fat. The resulting blooming-resistant fat had a 38-48TG content of 73.3% and a C12/C18 ratio of 1.8/1. Thirty parts of the blooming-resistant fat were mixed with 70 parts of purified fractionated palm kernel oil. Chocolate was prepared using the mixture as test oil and applied to the same preservation test as in Example 1.

### EXAMPLE 3

A reaction oil obtained by interesterification of 10 parts of a high melting point fraction (stearin) of palm oil and 90 parts of palm kernel olein using sodium methylate was used as blooming-resistant fat. The blooming-resistant fat had a 38-48TG content of 70.0% and a C12/C18 ratio of 1.3/1. Thirty parts of the blooming-resistant fat were mixed with 70 parts of purified fractionated hydrogenated palm kernel oil. Chocolate was prepared using the mixture as test oil and applied to the same preservation test as in Example 1.

### EXAMPLE 4

Ten parts of palm oil and 90 parts of palm kernel olein were interesterificated enzymatically using lipase to give blooming-resistant fat. The resulting blooming-resistant fat had a 38-48TG content of 72.5% and a C12/C18 ratio of 1.3/1. Twenty parts of the blooming-resistant fat were mixed with 80 parts of purified fractionated hydrogenated palm kernel oil. Chocolate was prepared using the mixture as test oil and applied to cookies. The chocolate coat was subjected to a preservation test.

### EXAMPLE 5

A reaction oil obtained by interesterification of 10 parts of palm oil and 90 parts of palm kernel oil using sodium methylate was fully hydrogenated to give blooming-resistant fat. The resulting blooming-resistant fat had a 38-48TG content of 72.3% and a C12/C18 ratio of 1.5/1. Thirty parts of the blooming-resistant fat were mixed with 70 parts of purified fractionated hydrogenated palm kernel oil. Chocolate was prepared using the mixture as test oil and applied to the same preservation test as in Example 4.

### EXAMPLE 6

A reaction oil obtained by interesterification of 10 parts of a high melting point fraction (stearin) of palm oil and 90 parts of palm kernel olein using sodium methylate was hydrogenated to give blooming-resistant fat having an ascending melting point of 34°C, a 38-48TG content of 70.4%, and a C12/C18 ratio of 1.3/1. Chocolate was prepared using the resulting blooming-resistant fat as test oil and applied to the same preservation test as in Example 1.

### COMPARATIVE EXAMPLE 1

Twenty parts of hydrogenated palm kernel oil having an ascending melting point of 34°C, a 38-48TG content of 54.2%, and a C12/C18 ratio of 3.3/1 were mixed with 80 parts of purified fractionated hydrogenated palm kernel oil. Chocolate was prepared using the resulting mixture as test oil and applied to the same preservation test as in Example 1.

### COMPARATIVE EXAMPLE 2

Twenty parts of a composition (38-48TG content: 43.3%; C12/C18 ratio: 1.8/1) consisting of 20 parts of a high melting point fraction (stearin) of palm oil and 80 parts of hydrogenated palm kernel oil were mixed with 80 parts of purified fractionated hydrogenated palm kernel oil. Chocolate was prepared using the resulting mixture as test oil and applied to the same preservation test as in Example 4.

### COMPARATIVE EXAMPLE 3

Twenty parts of a reaction oil obtained by interesterification of 70 parts of a high melting point fraction (stearin) of palm oil and 30 parts of hydrogenated palm kernel olein using sodium methylate were mixed with 80 parts of purified fractionated hydrogenated palm kernel oil. Chocolate was prepared using the resulting mixture as test oil and applied to the same preservation test as in Example 4.

The foregoing Examples and Comparative Examples are tabulated in Table 3, and the results of the preservation test are shown in Table 2. It is seen from the tables that fats and oils having a 38-48TG content and a C12/c18 ratio both falling within the respective specific ratio not only exhibit blooming-resistant properties per se but impart remarkable bloom resistance to laurin-base hard butter when added thereto. These fats and oils do not impair the pleasant melting properties in the mouth, characteristics of laurin-base hard butter, even when used in a considerably large amount.

**TABLE 2**

| Results* of Preservation Test | | |
|---|---|---|
| | 15°C | 20°C |
| Example 1 | 55 dys | 72 dys |
| Example 2 | 43 dys | 64 dys |
| Example 3 | 39 dys | 58 dys |
| Example 4 | 42 dys | 66 dys |
| Example 5 | 45 dys | 68 dys |
| Example 6 | 79 dys | 98 dys |
| Comparative Example 1 | 12 dys | 19 dys |
| Comparative Example 2 | 16 dys | 26 dys |
| Comparative Example 3 | 25 dys | 40 dys |

| | | |
|---|---|---|
| Note: * The number of days having passed before blooming occurred. | | |

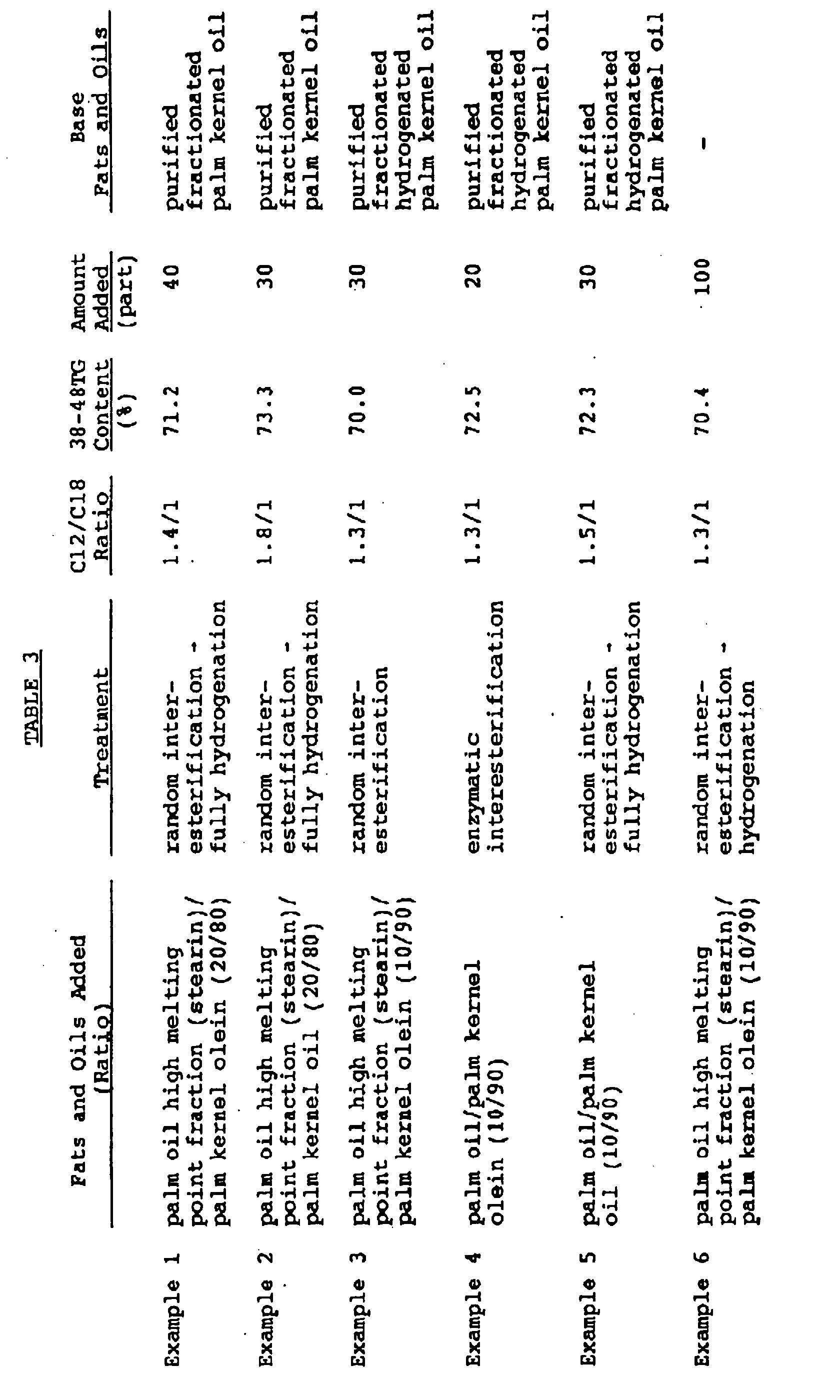

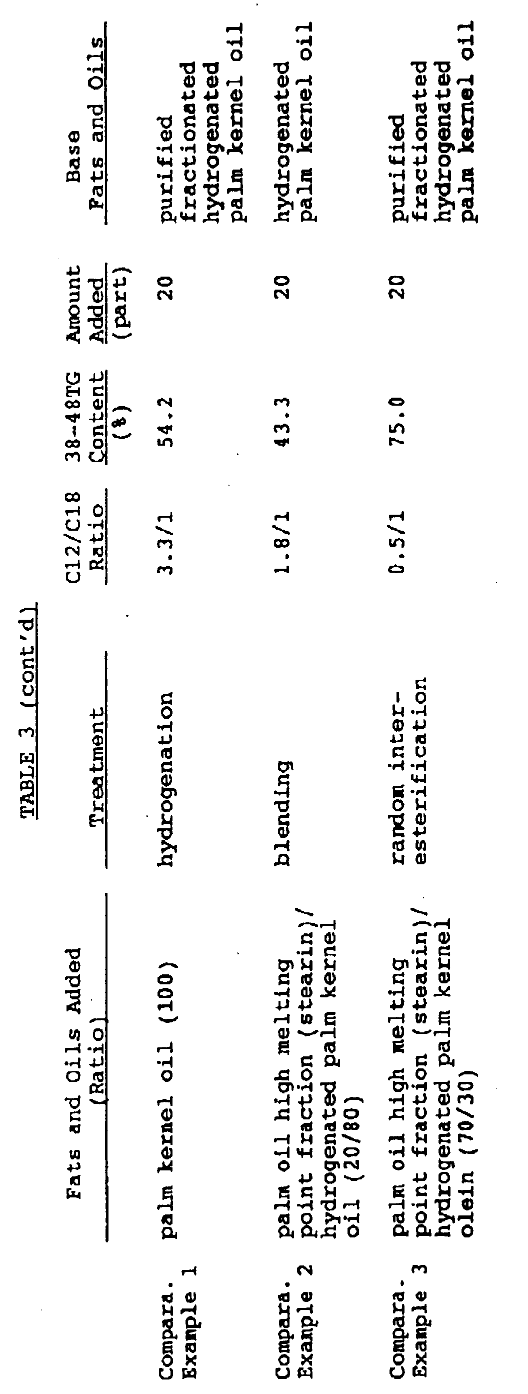

## Claims

1. A blooming-resistant fat containing at least 68% by weight of triglycerides wherein the total number of carbon atoms of the constituent fatty acid residues is 38 to 48 and the weight ratio of fatty acids having 12 carbon atoms constituting the triglyceride to that of stearic acid is 1.2/1 to 2.1/1.

2. Laurin-base hard butter having added thereto at least 1% by weight of the blooming-resistant fat claimed in Claim 1.

## Patentansprüche

1. Gegen Reifbildung beständiges Fett, das mindestens 68 Gew.-% Triglyceride enthält, worin die Gesamtzahl der Kohlenstoffatome der am Aufbau beteiligten Fettsäure-Reste 38 bis 48 ist und das Gewichtsverhältnis der Fettsäuren mit 12 Kohlenstoffatomen, die das Triglycerid bilden, zu Stearinsäure 1,2/1 bis 2,1/1 ist.

2. Hartbutter auf Laurin-Basis, die mindestens 1 Gew.-% gegen Reifbildung beständiges Fett nach Anspruch 1 zugesetzt enthält.

## Revendications

1. Matière grasse résistant au blanchiment contenant au moins 68 % en poids de triglycérides dans lesquels le nombre total d'atomes de carbone des résidus acides gras constitutifs est de 38 à 48 et le rapport en poids des acides gras ayant 12 atomes de carbone constituant le triglycéride à l'acide stéarique est de 1,2/1 à 2,1/1.

2. Beurre dur à base de laurine auquel a été ajouté au moins 1 % en poids de la matière grasse résistant au blanchiment revendiquée dans la revendication 1.
